# EUROPÄISCHE PATENTSCHRIFT

(11) **EP 3 032 224 B1**
(45) Veröffentlichungstag und Bekanntmachung des Hinweises auf die Patenterteilung: **19.08.2020**
(21) Anmeldenummer: 15184163.2
(22) Anmeldetag: 08.09.2015
(51) Int. Cl.: G01D 5/14, G01P 1/02, G01P 3/487, H02K 11/21, F16D 1/06

(54) **BEFESTIGUNG EINES GEBERMITTELS AN EINEM ENDE EINER WELLE**
MOUNTING OF AN ENCODER TO THE END OF A SHAFT
MONTAGE D'UN ENCODEUR SUR L'EXTREMITE D'UN ARBRE

(30) Priorität: 18.11.2014 DE 102014223513
(43) Veröffentlichungstag der Anmeldung: 15.06.2016
(73) Patentinhaber: Bühler Motor GmbH, 90459 Nürnberg (DE)
(72) Erfinder: Hager, Ludwig, 90491 Nürnberg (DE)

(56) Entgegenhaltungen:
- DE-A1-102004 059 181
- DE-A1-102011 079 657
- US-A- 6 013 961

## Beschreibung

Die Erfindung betrifft ein Vorrichtung (1, 2, 3) zur Befestigung eines Gebermittels (1) an einem Ende einer Welle (2) eines elektrischen Antriebs. Mit "Gebermittel" ist ein Geber oder eine Baueinheit aus einem Trägerteil und einem Geber gemeint.

Es ist bekannt beispielsweise Magnetgeberelemente unmittelbar auf Wellenenden oder in Vertiefungen der Wellenenden zu kleben. Diese Befestigungsmöglichkeit schließt die Gefahr eines ungewollten Lösens der Klebeverbindung ein, insbesondere bei mit aggressiven Medien gefüllten Pumpenmotoren, z. B. Ölpumpenmotoren. Hierbei sind zugeordnete Sensormittel in der Regel durch eine abgedichtete Wand vom Sensormagneten getrennt. Hierbei addieren sich Wandungsstärke und Freiraum zwischen Sensormagnet und Trennwand, wodurch die Signalstärke erheblich eingeschränkt ist. Weiter werden Feldlinien durch die unmittelbar anschließende Welle geleitet, wodurch das Feld geschwächt wird. Daher ist es notwendig mit dem Sensorgeber von der Welle zu entfernen und möglichst nahe an die Trennwand heranzurücken ohne den Bauraum zu vergrößern.

Aus der DE 10 2005 062 784 A1 ist ein gattungsgemäßes Gebermittel bekannt, welches in Form einer Magnet-Baueinheit ausgebildet ist. Zur Befestigung der Magnet-Baueinheit auf der Welle dient ein spritzgusstechnisch hergestellter Magnethalter und ein Magnetelement, wobei diese zunächst als separate Bauteile ausgeführt sind. Im montierten Zustand ist das Magnetelement in den Kunststoff des Magnethalters eingespritzt und der Magnethalter mit der Welle verbunden. Zur Befestigung dient ein federnder Toleranzring, welcher in einer Einlegenut des Magnethalters angeordnet ist. Die Magnet-Baueinheit vergrößert den Durchmesser der Welle, wodurch ein vergrößerter Platzbedarf besteht. Das zusätzliche Federelement erhöht den Teileaufwand und erschwert die Montage. Zwischen der Welle und der Magnet-Baueinheit besteht lediglich eine kraftschlüssige Verbindung.

Die nächstliegende DE 10 2011 079 657 A1 offenbart ein Gebermittel zur Befestigung an einem Ende einer Welle, wobei das Wellenende zumindest eine Ausnehmung aufweist in welche das Gebermittel eingreift, wodurch eine zumindest in Richtung einer Wellenachse wirkende formschlüssige Verbindung gebildet ist.

Aus der DE 10 2004 059 181 A1 ist ein elektrischer Antrieb mit einer ein Wellenende aufweisenden Welle, einem Lager, einem Gebermittel zur Befestigung an einem Ende der Welle, wobei das Wellenende zumindest eine Ausnehmung aufweist in welche das Gebermittel eingreift, wodurch eine zumindest in Richtung einer Wellenachse wirkende formschlüssige Verbindung gebildet ist und wobei das Lager des elektrischen Antriebs als Sicherungsmittel gegen Lösen der formschlüssigen Verbindung dient, bekannt.

Die US 6 013 961 A offenbart auch einen solchen elektrischen Antrieb mit einer ein Wellenende aufweisenden Welle, einem Lager, einem Gebermittel zur Befestigung an einem Ende der Welle, wobei das Wellenende zumindest eine Ausnehmung aufweist in welche das Gebermittel eingreift, wodurch eine zumindest in Richtung einer Wellenachse wirkende formschlüssige Verbindung gebildet ist und wobei das Lager des elektrischen Antriebs als Sicherungsmittel gegen Lösen der formschlüssigen Verbindung dient.

Aufgabe der Erfindung ist es daher eine gattungsgemäße Vorrichtung (1, 2, 3) zur Befestigung eines Gebermittels (1) an einem Ende einer Welle (2) darzustellen, die besonders einfach aufgebaut ist, die Teileanzahl gering hält und eine besonders einfache und sichere Montage erlaubt, wodurch eine verliersichere und drehfeste Verbindung möglich ist.

Diese Aufgabe wird erfindungsgemäß durch Anspruch 1 gelöst. Dabei weist das Wellenende zwei Ausnehmungen auf in welche das Gebermittel eingreift wodurch eine zumindest in Richtung einer Wellenachse wirkende formschlüssige Verbindung gebildet ist. Die Ausnehmungen (3) am Wellenende sind als zwei parallele quer zur Wellenlängsrichtung ausgerichtete Quernuten ausgebildet, wobei eine zwischen den Quernuten und einer benachbarten Wellenstirnseite verbleibende Rippe (7) gegenüber der Innenkontur des Lagers (4) zurückspringt und der hierdurch gewonnene Raumbereich vom Gebermittel (1) eingenommen ist und dass das Lager des elektrischen Antriebs als Sicherungsmittel gegen Lösen der formschlüssigen Verbindung dient. Da das Lager ohnehin vorhanden ist, wird für die Sicherung des Gebermittels kein zusätzliches Bauteil benötigt. Zudem kann hierfür Bauraum innerhalb des Lagers verwendet werden. Das Gebermittel wird bei der Montage quer zur Wellenlängsrichtung (Achsrichtung) in die Quernuten aufgeschoben und formschlüssig mit der Welle verbunden. Vorzugsweise weist das Wellenende quer zur Wellenlängsrichtung zwei parallele Quernuten auf.

Weiterbildungen der Erfindung werden in den Unteransprüchen dargestellt. Da das Gebermittel zumindest bereichsweise eine zylindrische Außenkontur aufweist, welche dem Außendurchmesser der Welle zumindest annähernd entspricht und sich zumindest teilweise in einen zylindrischen Innenbereich des Lagers erstreckt, vergrößert sich der Bauraum radial nicht.

Das Gebermittel weist eine korrespondierende Gegenkontur zum Wellenende auf und ist radial zur Wellenachse auf das Wellenende aufgeschoben, wobei das Lager ein seitliches/radiales Ausweichen des Gebermittels von der Welle verhindert. Hierdurch ist sowohl in axialer als auch in radialer Richtung eine robuste formschlüssige Verbindung gebildet, welche auch unter erschwerten Bedingungen sicher ist.

Gemäß einer bevorzugten ersten Variante der ersten Ausführungsform der Erfindung besteht das Gebermittel aus einem Trägerteil und einem Geberteil, wobei das Trägerteil die formschlüssige Verbindung mit der Welle eingeht.

Das Geberteil ist zwischen dem Wellenende und einem Bereich des Trägerteils montiert. Hierdurch ist auch das Geberteil formschlüssig mit der Welle verbunden.

Soll eine innige Verbindung zwischen dem Geberteil und dem Trägerteil hergestellt werden, ist es gemäß einer zweiten Variante der ersten Ausführungsform zweckmäßig das Geberteil mit dem Trägerteil durch Urformen zu fügen. Dabei kann das Geberteil sowohl ein kunststoffgebundener Magnet als auch eine handelsübliche Magnetpille sein, welche beispielsweise aus Ferrit oder einem Seltenerdmaterial wie NdFeB besteht.

Eine besonders einfache Lösung ist durch eine dritte Variante der ersten Ausführungsform gefunden worden, nach welcher das Gebermittel einstückig ausgebildet ist und sowohl die Funktion des Geberteils als auch die Funktion des Trägerteils ausübt. Das Gebermittel besteht dabei aus einem kunststoffgebundenen Permanentmagneten.

Bei einer vierten Variante der ersten Ausführungsform ist das Gebermittel durch ein Zweikomponenten-Spritzgussverfahren hergestellt und umfasst im Trägerteil magnetfreie und im Geberteil Magnetmaterial enthaltende Bereiche. Diese Variante ist insbesondere bei Verwendung von Seltenerdmaterial empfehlenswert.

Eine fünfte Variante ist dadurch gekennzeichnet, dass das Wellenende eine mehreckige genutete Kontur aufweist, wobei zwischen den Nuten und einer benachbarten Wellenstirnseite verbleibende Rippen gegenüber der Innenkontur des Lagers zurückspringen und der hierdurch gewonnene Raumbereich vom Gebermittel eingenommen ist. Diese Lösung erlaubt unterschiedliche Einbaupositionen des Gebermittels und somit relativ zum Rotor unterschiedliche magnetischen Ausrichtungen des Gebermittels.

Bei einer sechsten Variante befinden sich schnapphakenartige Mittel am Gebermittel, welche in die Nut bzw. in die Nuten eingreifen, wobei die Schnappmittel durch das Lager gegen Lösen gesichert sind. Dadurch lässt sich das Gebermittel auch axial montieren.

Die genannten Varianten lassen sich teilweise miteinander kombinieren.

Ausführungsbeispiele der Erfindung werden nachfolgend anhand der Zeichnung näher erläutert. Es zeigen:
Fig. 1 eine erste Ausführungsform eines Gebermittels und einer Welle,
Fig. 2 eine Schnittdarstellung der ersten Ausführungsform im montierten Zustand,
Fig. 3 eine 3-D-Darstellung der ersten Ausführungsform im montierten Zustand,
Fig. 4 eine Variante des Gebermittels der ersten Ausführungsform,
Fig. 5 eine Variante mit einer querliegenden Magnetpille,
Fig. 6 eine weitere Darstellung der querliegenden Magnetpille,
Fig. 7 ein zweites Beispiel, das nicht Teil der Erfindung ist,
Fig. 8 das zweite Beispiel im montierten Zustand,
Fig. 9 eine Welle für die Verwendung bei dem zweiten Beispiel,
Fig. 10 eine Schnittdarstellung des zweiten Beispiels,
Fig. 11 eine zweite Schnittdarstellung des zweiten Beispiels,
Fig. 12 eine dritte Schnittdarstellung des zweiten Beispiels und

Hinweis: Bezugszeichen mit Apostroph und entsprechende Bezugszeichen ohne Apostroph bezeichnen namensgleiche Einzelheiten in den Zeichnungen und der Zeichnungsbeschreibung. Es handelt sich dabei um die Verwendung in einer anderen Ausführungsform, dem Stand der Technik und/oder die Einzelheit ist eine Variante. Die Ansprüche, die Beschreibungseinleitung, die Bezugszeichenliste und die Zusammenfassung enthalten der Einfachheit halber nur Bezugszeichen ohne Apostroph.

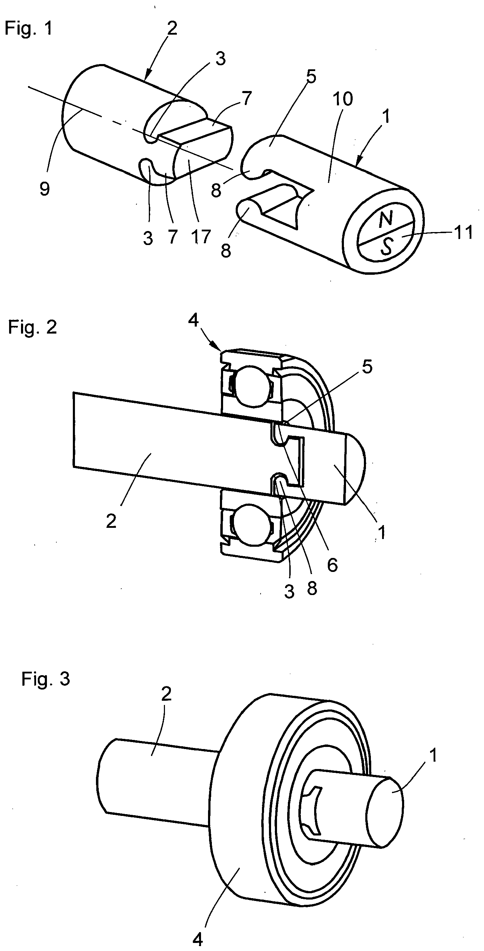

Fig. 1 zeigt eine erste Ausführungsform eines Gebermittels 1 und einer Welle 2, wobei die Welle 2 zwei parallel verlaufende Ausnehmungen 3 aufweist, welche quer zur Wellenachse 9 ausgerichtet sind. Ein Bereich zwischen den Ausnehmungen 3 und dem Wellenende 17 ist bildet Rippen 7, welche abgeflacht sind, so dass Raum für das Gebermittel 1 verfügbar ist. Das Gebermittel ist angepasst an den Durchmesser der Welle 2 und an die Kontur der Ausnehmungen 3 in welche sie mit Gegenkonturen 8 eingreifen kann. Das Gebermittel besteht aus einem Geberteil 11 und einem Trägerteil 10. Das Geberteil 11 besteht aus einem zweipoligen Permanentmagneten. Höherpolige Geberteile 11 sind möglich. Die Rippen 7 bilden mit entsprechenden Gegenflächen Verdrehsicherungen des Gebermittels 1 gegenüber der Welle 2. Das Gebermittel 1 lässt sich radial auf die Welle aufschieben.

Fig. 2 zeigt eine Schnittdarstellung der ersten Ausführungsform im montierten Zustand, mit dem Gebermittel 1, der Welle 2 und einem Lager 4, hier als Kugellager ausgebildet. Das Gebermittel 1 greift über die Gegenkonturen 8 in die Ausnehmungen 3 ein. Seitlich kann das Gebermittel 1 nicht demontiert werden, weil ein Innenbereich des Lagers 4 sowohl die Welle 2 als auch das Gebermittel 1 umfasst. Das Lager 4 ist auf der Welle 2 aufgepresst.

Fig. 3 zeigt eine 3-D-Darstellung der ersten Ausführungsform im montierten Zustand, mit dem Gebermittel 1, der Welle 2 und dem Lager 4.

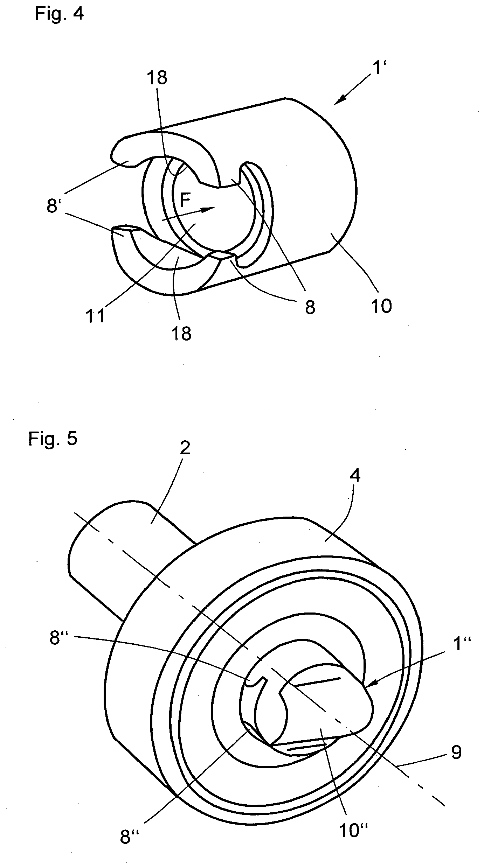

Fig. 4 ist eine Variante des Gebermittels 1' der ersten Ausführungsform, wobei die Gegenkonturen 8' nicht durchgängig rippenförmig geformt sind, sondern zylindersegmentförmige Aussparungen 20 aufweisen, diese dienen als Montageöffnung für das Geberteil 11, welches von innen montiert ist (siehe Pfeil F).

Fig. 5 zeigt eine Variante mit einer querliegenden Magnetpille (Geberteil), welche die äußere Kontur des Gebermittels 1" vorgibt. Die Grundform des Geberteils 11" ist zylindrisch und seine Achse ist rechtwinklig zur Längsachse 9 der Welle 2 ausgerichtet. Das Gebermittel 1", insbesondere das Trägerteil 10" ist im eingebauten Zustand über die Gegenkonturen 8" an der Welle 2 montiert und durch das Lager 4 gesichert.

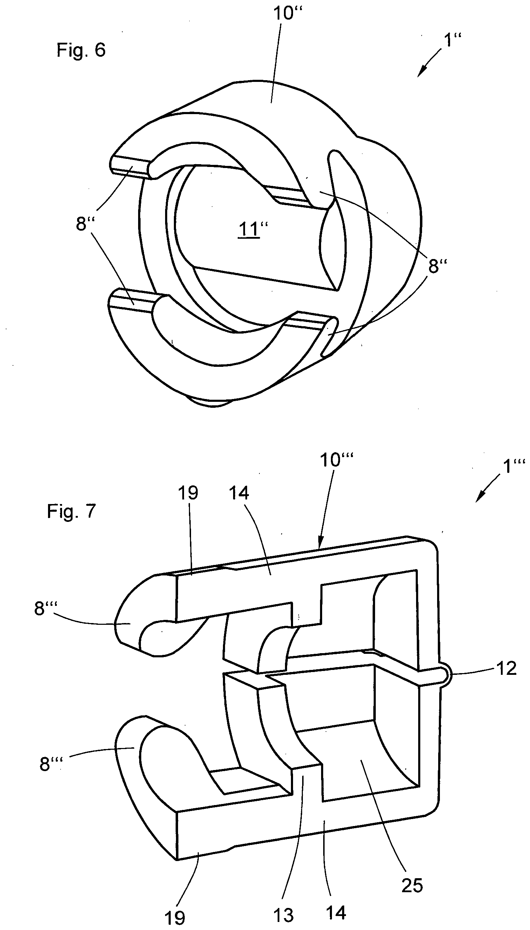

Eine weitere Darstellung der querliegenden Magnetpille (Geberteil 11") im Gebermittel 1" zeigt in Fig. 6. Weiter sind die Gegenkonturen 8" für den Formschluss mit der Welle deutlich zu erkennen.

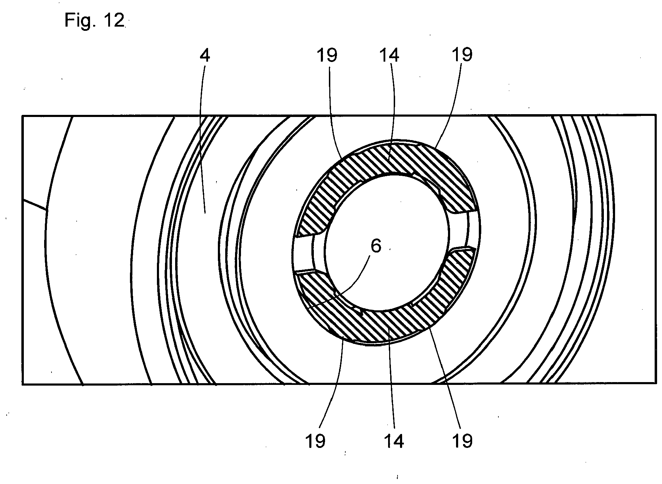

Fig. 7 zeigt ein zweites Beispiel, das nicht Teil der Erfindung ist, bei welchem das Trägerteil 10"' aus zwei Teilträgermitteln 14 besteht, welche durch ein Filmscharnier 12 miteinander einstückig sind. Ein Innenraum 25 ist zylindrisch ausgebildet zur Aufnahme eines zylindrischen Geberteils, wobei hierbei die Achsrichtungen von Welle und Geberteil auf der gleichen Geraden liegen. Der Innenraum wird wellennah durch ein Abstandsmittel 13 begrenzt. Dieses bewirkt einen Abstand zwischen dem Geberteil und dem Wellenende der Welle. Die Gegenkonturen 8"' dienen zur Herstellung eines Formschlusses mit der Welle. Das Trägerteil 10"' weist am Außenumfang Erweiterungen 19 auf, welche mit dem Innenbereich eines Lagers (hier nicht dargestellt) zusammenwirken (siehe auch Fig. 12).

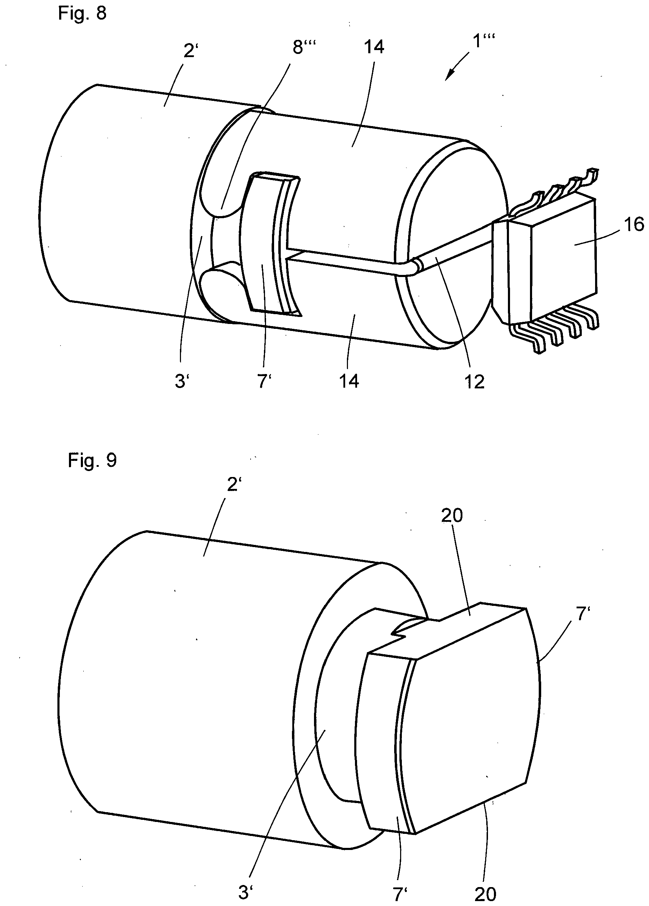

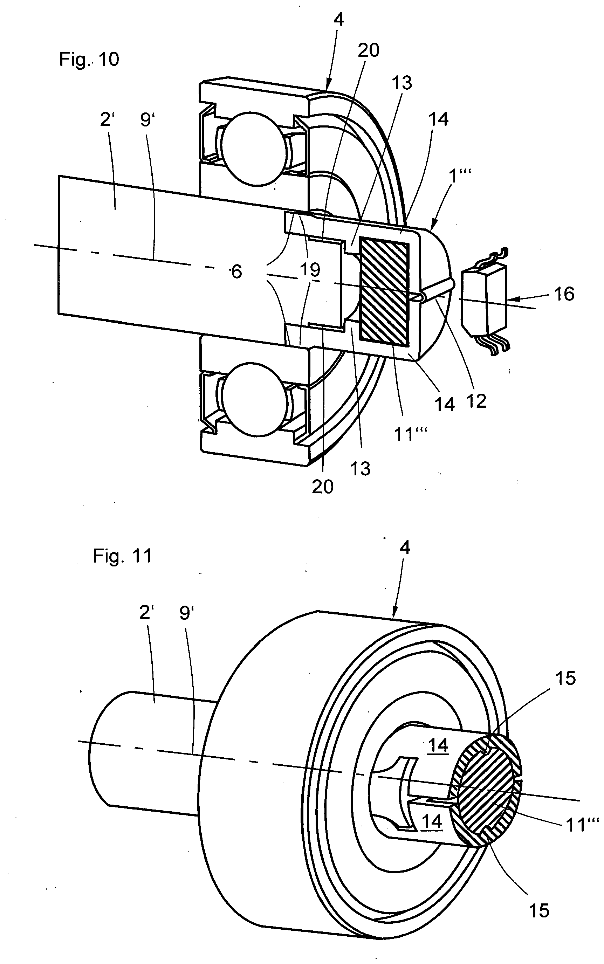

Fig. 8 zeigt das zweite Beispiel im montierten Zustand, mit einer Welle 2', einer Ausnehmung 3' und einer Rippe 7'. Die Gegenkonturen 8"' des Gebermittels 1"' greifen in die Ausnehmung 3' ein und werden axial von der Rippe 7' gehalten. Die Teilträgermittel 14 werden einerseits durch das Filmscharnier 12 zusammengehalten und andererseits durch den Innenbereich eines Lagers gesichert sind (siehe Fig. 10). Schließlich ist ein Sensor 16 in seiner Einbaulage stirnseitig zum Gebermittel 1"' dargestellt.

Fig. 9 zeigt die Welle 2' für die Verwendung bei dem zweiten Beispiel, mit der Ausnehmung 3' und den Rippen 7'. Zwischen den Rippen 7' befinden sich Abflachungen 20, welche als Freiraum für die Teilträgermittel dienen.

Fig. 10 zeigt eine Schnittdarstellung des zweiten Beispiels, mit der Welle 2', dem Lager 4, welches hier als Kugellager ausgeführt ist, das Gebermittel 1"', einem Geberteil 11"' (schraffierte Fläche), den Abstandsmitteln 13, dem Filmscharnier 12, den Abflachungen 20, dem Innenbereich 6 des Lagers 4, welcher als axialer Abschnitt des Innenrings des Kugellagers gebildet ist, die Erweiterungen 19 und die Teilträgermittel 14. Auch hier ist der Sensor 16 in seiner Einbaulage stirnseitig zum Gebermittel 1"' auf der Achse 9' der Welle 2' gezeigt.

Fig. 11 zeigt eine zweite Schnittdarstellung des zweiten Beispiels wobei der Schnitt rechtwinklig zur Motorachse 9' ausgerichtet ist und durch den Bereich des Gebermittels 11"' verläuft. Durch den Schnitt sind Verdrehsicherungen 15 zu erkennen, welche als Vorsprünge in den Teilträgermitteln 14 und als Rücksprünge im Gebermittel 11"'gebildet sind, wobei die Vorsprünge in die Rücksprünge eingreifen. Weiter ist das Lager 4 gezeigt, welches als Sicherungsmittel dient.

Fig. 12 zeigt eine dritte Schnittdarstellung des zweiten Beispiels, wobei der Schnitt ebenfalls rechtwinklig zur Motorachse ausgerichtet ist, hier aber am Endbereich des Lagers 4 verläuft. Hier sind deutlich die Erweiterungen 19 der Teilträgermittel 14 zu erkennen, welche mit dem Innenbereich 6 des Lagers 4 zusammenwirken.

### Bezugszeichenliste

- 1: Gebermittel
- 2: Welle
- 3: Ausnehmung
- 4: Lager
- 5: Außenkontur
- 6: Innenbereich
- 7: Rippe
- 8: Gegenkontur
- 9: Wellenachse
- 10: Trägerteil
- 11: Geberteil
- 12: Filmscharnier
- 13: Abstandsmittel
- 14: Teilträgermittel
- 15: Verdrehsicherung
- 16: Sensor
- 17: Wellenende
- 18: Aussparung
- 19: Erweiterung
- 20: Abflachung
- 25: Innenraum

## Patentansprüche

1. Vorrichtung (1, 2, 3) zur Befestigung eines Gebermittels (1) an einem Ende einer Welle (2) eines elektrischen Antriebs, aufweisend ein Gebermittel (1), eine Welle (2) mit einem Wellenende und einem Lager (3), wobei das Wellenende zwei Ausnehmungen (3) aufweist, in welche das Gebermittel (1) eingreift, wodurch eine zumindest in Richtung einer Wellenachse (9) wirkende formschlüssige Verbindung gebildet ist, **dadurch gekennzeichnet, dass** die Ausnehmungen (3) am Wellenende als zwei parallele quer zur Wellenlängsrichtung ausgerichtete Quernuten ausgebildet sind, wobei eine zwischen den Quernuten und einer benachbarten Wellenstirnseite verbleibende Rippe (7) gegenüber der Innenkontur des Lagers (4) zurückspringt und der hierdurch gewonnene Raumbereich vom Gebermittel (1) eingenommen ist und dass das Lager (4) des elektrischen Antriebs als Sicherungsmittel gegen Lösen der formschlüssigen Verbindung dient.

2. Vorrichtung nach Anspruch 1, **dadurch gekennzeichnet, dass** das Gebermittel (1) zumindest bereichsweise eine zylindrische Außenkontur (5) aufweist, welche dem Außendurchmesser der Welle (2) zumindest annähernd entspricht und sich zumindest teilweise in einen zylindrischen Innenbereich (6) des Lagers (4) erstreckt.

3. Vorrichtung nach Anspruch 1, **dadurch gekennzeichnet, dass** das Gebermittel (1) eine korrespondierende Gegenkontur (8) zum Wellenende aufweist und radial zur Wellenachse (9) auf das Wellenende aufgeschoben ist, wobei das Lager (4) ein seitliches Ausweichen des Gebermittels (1) von der Welle (2) verhindert.

4. Vorrichtung nach Anspruch 1 oder 2, **dadurch gekennzeichnet, dass** es aus einem Trägerteil (10) und einem Geberteil (11) besteht und das Trägerteil (10) die formschlüssige Verbindung mit der Welle eingeht.

5. Vorrichtung nach Anspruch 4, **dadurch gekennzeichnet, dass** das Geberteil (11) zwischen dem Wellenende und einem Bereich des Trägerteils (10) montiert ist.

6. Vorrichtung nach Anspruch 4, **dadurch gekennzeichnet, dass** das Geberteil (11) mit dem Trägerteil durch Urformen gefügt ist.

7. Vorrichtung nach zumindest einem der Ansprüche 1 bis 6, **dadurch gekennzeichnet, dass** das Gebermittel selbst der Geber ist und die formschlüssige Verbindung mit der Welle (2) eingeht.

8. Vorrichtung nach Anspruch 4, **dadurch gekennzeichnet, dass** das Geberteil (11) ein kunstoffgebundener Permanentmagnet ist.

9. Vorrichtung nach zumindest einem der Ansprüche 1, 2, 4, 5, 6, 7 oder 8, **dadurch gekennzeichnet, dass** das Wellenende eine mehreckige genutete Kontur aufweist, wobei zwischen den Nuten und einer benachbarten Wellenstirnseite verbleibende Rippen (7) gegenüber der Innenkontur des Lagers (4) zurückspringen und der hierdurch gewonnene Raumbereich vom Gebermittel eingenommen ist.

10. Vorrichtung nach zumindest einem der Ansprüche 1, 3 oder 9, **dadurch gekennzeichnet, dass** das Gebermittel (1) schnapphakenartige Mittel besitzt, welche in die Nut bzw. in die Nuten eingreifen, wobei die Schnappmittel durch das Lager gegen Lösen gesichert sind.

11. Vorrichtung nach zumindest einem der vorangehenden Ansprüche, **dadurch gekennzeichnet, dass** es ein Filmscharnier (12) aufweist, welches mit mindestens zwei Teilträgermitteln (14) einstückig ist.

12. Vorrichtung nach Anspruch 4, **dadurch gekennzeichnet, dass** es eine Verdrehsicherung (15) zwischen dem Trägerteil (10) und dem Geberteil (11) aufweist.

13. Vorrichtung nach Anspruch 4, **dadurch gekennzeichnet, dass** es ein Abstandsmittel (13) aufweist, welches einen Abstand zwischen dem Geberteil (11) und dem Wellenende der Welle (2) gewährleistet.

## Claims

1. A device (1, 2, 3) for securing an encoder means (1) to an end of a shaft (2) of an electric drive, having an encoder means (1), a shaft (2) with a shaft end and with a bearing (3), wherein the shaft end has two cutouts (3) into which there engages the encoder means (1), whereby there is formed a form-locked connection acting at least in the direction of a shaft axis (9), **characterised in that** the cutouts (9) are formed at the shaft end as two parallel transverse grooves oriented transversely to the shaft longitudinal direction, wherein a rib (7) remaining between the transverse grooves and an adjacent shaft end face stands back with respect to the inner contour of the bearing (4) and the spatial region hereby obtained is occupied by the encoder means (1) and **in that** the bearing (4) of the electric drive serves as a securing means against disconnection of the form-locked connection.

2. A device according to claim 1, **characterised in that** at least regions of the encoder means (1) have a cylindrical outer contour (5) which at least approximately corresponds to the outer diameter of the shaft (2) and which at least partially extends into a cylindrical inner region (6) of the bearing (4).

3. A device according to claim 1, **characterised in that** the encoder means (1) has a counter contour (8) corresponding to the shaft end and is pushed onto the shaft end in a manner radial to the shaft axis (9), wherein the bearing (4) prevents a lateral shifting of the encoder means (1) from the shaft (2).

4. A device according to claim 1 or 2, **characterised in that** it is composed of a carrier part (10) and an encoder part (11) and the carrier part (10) enters into the form-locked connection with the shaft.

5. A device according to claim 4, **characterised in that** the encoder part (11) is mounted between the shaft end and a region of the carrier part (10).

6. A device according to claim 4, **characterised in that** the encoder part (11) is joined to the carrier part by primary shaping.

7. A device according to at least one of claims 1 to 6, **characterised in that** the encoder means itself is the encoder and enters into the form-locked connection to the shaft (2).

8. A device according to claim 4, **characterised in that** the encoder part (11) is a plastic-bonded permanent magnet.

9. A device according to at least one of claims 1, 2, 4, 5, 6, 7 or 8, **characterised in that** the shaft end has a polygonal, grooved contour, wherein ribs (7) remaining between the grooves and an adjacent shaft end face stand back with respect to the inner contour of the bearing (4) and the spatial region hereby obtained is occupied by the encoder means.

10. A device according to at least one of claims 1, 3 or 9, **characterised in that** the encoder means (1) has means in the manner of a snap-in hook which engage the groove or the grooves, wherein the snap-action means are secured against disconnection by the bearing.

11. A device according to at least one of the preceding claims, **characterised in that** it has a film hinge (12) which is in one piece with at least two partial carrier means (14).

12. A device according to claim 4, **characterised in that** it has an anti-rotation means (15) between the carrier part (10) and the encoder part (11).

13. A device according to claim 4, **characterised in that** it has a spacer means (13) which guarantees a spacing between the encoder part (11) and the shaft end of the shaft (2).

## Revendications

1. Dispositif (1, 2, 3) pour fixer un moyen transmetteur (1) à une extrémité d'un arbre (2) d'un entraînement électrique, présentant un moyen transmetteur (1), un arbre (2) avec une extrémité d'arbre et un palier (3), dans lequel l'extrémité d'arbre présente deux évidements (3) dans lesquels s'engage le moyen transmetteur (1), de sorte qu'une liaison positive agissant au moins dans la direction d'un axe d'arbre (9) est formée, **caractérisé en ce que** les évidements (3) à l'extrémité d'arbre sont sous forme de deux rainures transversales parallèles dirigées transversalement à la direction longitudinale de l'arbre, dans lequel une nervure (7) demeurant entre les rainures latérales et un côté frontal d'arbre voisin est en retrait par rapport au contour intérieur du palier (4) et l'espace ainsi obtenu est occupé par le moyen transmetteur (1) et **en ce que** le palier (4) de l'entraînement électrique sert de moyen de sécurisation contre le desserrage de la liaison positive.

2. Dispositif selon la revendication 1, **caractérisé en ce que** le moyen transmetteur (1) présente au moins par domaines un contour extérieur cylindrique (5), qui correspond au moins approximativement au diamètre extérieur de l'arbre (2) et s'étend au moins partiellement dans un domaine intérieur cylindrique (6) du palier (4)).

3. Dispositif selon la revendication 1, **caractérisé en ce que** le moyen transmetteur (1) présente un contre-contour (8) correspondant à l'extrémité d'arbre et est enfilé sur l'extrémité d'arbre radialement par rapport à l'axe d'arbre (9), dans lequel le palier (4) empêche le moyen transmetteur (1) de dévier latéralement de l'arbre (2).

4. Dispositif selon la revendication 1 ou 2, **caractérisé en ce qu'**il consiste en une partie support (10) et une partie transmetteur (11) et la partie support (10) participe à la liaison positive avec l'arbre.

5. Dispositif selon la revendication 4, **caractérisé en ce que** la partie transmetteur (11) est montée entre l'extrémité d'arbre et un domaine de la partie support (10).

6. Dispositif selon la revendication 4, **caractérisé en ce que** la partie transmetteur (11) est jointe à la partie support par mise en forme primitive.

7. Dispositif selon au moins l'une des revendications 1 à 6, **caractérisé en ce que** le moyen transmetteur lui-même est le transmetteur et participe à la liaison positive avec l'arbre (2).

8. Dispositif selon la revendication 4, **caractérisé en ce que** la partie transmetteur (11) est un aimant permanent à liant synthétique.

9. Dispositif selon au moins l'une des revendications 1, 2, 4, 5, 6, 7 ou 8, **caractérisé en ce que** l'extrémité d'arbre présente un contour rainuré polygonal, dans lequel les nervures (7) demeurant entre les rainures et un côté frontal d'arbre voisin sont en retrait par rapport au contour intérieur du palier (4) et l'espace ainsi obtenu est occupé par le moyen transmetteur.

10. Dispositif selon au moins l'une des revendications 1, 3 ou 9, **caractérisé en ce que** le moyen transmetteur (1) possède des moyens de type crochet d'encliquetage qui s'engagent dans la rainure ou dans les rainures, dans lequel les moyens d'encliquetage sont fixés par le palier contre le desserrage.

11. Dispositif selon au moins l'une des revendications précédentes, **caractérisé en ce qu'**il présente une charnière film (12) qui est d'une pièce avec au moins deux moyens de support partiels (14).

12. Dispositif selon la revendication 4, **caractérisé en ce qu'**il présente un dispositif anti-rotation (15) entre la partie support (10) et la partie transmetteur (11).

13. Dispositif selon la revendication 4, **caractérisé en ce qu'**il présente un élément d'espacement (13) qui garantit une distance entre la partie transmetteur (11) et l'extrémité d'arbre de l'arbre (2).
